# EUROPEAN PATENT SPECIFICATION

(11) **EP 4 546 714 B1**
(45) Date of publication and mention of the grant of the patent: **25.03.2026**
(21) Application number: 23844883.1
(22) Date of filing: 03.04.2023
(51) Int. Cl.: H04L 9/40, H04L 43/028

(54) **TRAFFIC ANALYSIS METHOD, CLOUD PLATFORM, AND RELATED APPARATUS**
VERKEHRSANALYSEVERFAHREN, CLOUD-PLATTFORM UND ZUGEHÖRIGE VORRICHTUNG
PROCÉDÉ D'ANALYSE DE TRAFIC, PLATEFORME EN NUAGE ET APPAREIL ASSOCIÉ

(30) Priority: 27.07.2022 CN 202210892122; 08.09.2022 CN 202211098258
(43) Date of publication of application: 30.04.2025
(73) Proprietor: Huawei Cloud Computing Technologies Co., Ltd., Guiyang, Guizhou, 550025 (CN)
(72) Inventor: ZHANG, Haohao, Guiyang, Guizhou 550025 (CN)
(74) Representative: Maiwald GmbH
(86) International application number: PCT/CN2023/085905
(87) International publication number: WO 2024/021666

(56) References cited:
- CN-A- 112 350 882
- CN-A- 113 590 487
- CN-A- 114 513 566
- US-A1- 2014 258 779
- US-A1- 2019 173 901
- US-A1- 2019 207 976

## Description

### TECHNICAL FIELD

This application relates to the field of network security technologies, and in particular, to a traffic analysis method, a cloud platform, and a related apparatus.

### BACKGROUND

As a network scale increases, a network environment becomes complex. To ensure secure and stable running of a network, traffic analysis needs to be performed on traffic carried on the network, to obtain a traffic analysis result.

In a related technology, traffic analysis is performed by using an intrusion detection system (intrusion detection system, IDS), to determine a traffic analysis result. For example, a detection rule library is established through machine learning, and matching is performed between to-be-analyzed traffic and each rule included in the detection rule library, to determine a corresponding traffic analysis result. Alternatively, to-be-analyzed traffic can be copied through packet capture (packet capture), to obtain mirrored traffic, and then the mirrored traffic is sent to a traffic analysis device for traffic analysis.

However, when the traffic analysis is performed by using the IDS, the detection rule library needs to be maintained, and updating and loading of the rule are complex. When the traffic analysis is performed through packet capture, the traffic needs to be copied first, and then the traffic analysis is performed based on the mirrored traffic obtained through copy. As a result, a delay of the traffic analysis is long. Document CN113590487A discloses relevant background-art.

### SUMMARY

The present invention provides a traffic analysis method, a cloud platform, and a related apparatus, to improve timeliness of traffic analysis. Technical solutions are as follows.

According to a first aspect, a traffic analysis method is provided, applied to a cloud platform. The cloud platform includes a management node and a plurality of traffic analysis engines. The method includes: A management node obtains program code of a domain-specific language DSL corresponding to a target traffic analysis task, where the program code includes a location of a traffic analysis object, and the traffic analysis object is used to carry to-be-analyzed target traffic. The management node verifies the program code. When the verification of the program code succeeds, the management node allocates the program code to a target engine, where the target engine is a traffic analysis engine closest to the traffic analysis object in the plurality of traffic analysis engines. The target engine determines a traffic analysis result based on the program code.

The cloud platform includes the management node and the traffic analysis engines. The management node is configured to obtain the program code corresponding to the target traffic analysis task, and the traffic analysis engine is configured to perform traffic analysis based on the program code. In other words, in this application, after the management node in the cloud platform obtains the program code corresponding to the target traffic analysis task, the traffic analysis engine may directly analyze traffic in the cloud platform, and there is no need to first copy to-be-analyzed traffic based on a packet capture condition, and then send mirrored traffic to a traffic analysis device deployed outside the cloud platform for traffic analysis. Therefore, timeliness of traffic analysis can be improved.

In addition, all program code corresponding to the target traffic analysis task obtained by the management node is in a DSL language format. Therefore, an entire cloud computing environment is used as a unified language interface, so that different traffic analysis engines correspond to the unified language format. In other words, according to the method provided in this application, real-time and accurate traffic analysis can be performed in the cloud computing environment by using the unified DSL language format.

In different cases, manners in which the management node obtains the program code of the DSL corresponding to the target traffic analysis task are different. The following separately provides descriptions by using the following two cases.

In a first case, the management node receives the program code of the DSL corresponding to the target traffic analysis task, where the program code is submitted by a user terminal.

The user terminal submits the program code to the management node, where the program code is the program code of the DSL corresponding to the target traffic analysis task. After receiving the program code submitted by the user terminal, the management node determines the program code as the program code of the DSL corresponding to the target traffic analysis task.

When the user terminal detects a traffic analysis operation of a user, the user terminal displays a program editing interface, where the program editing interface includes a program code editing box. The user can enter the program code in the program code editing box. When detecting a confirmation operation of the user, the user terminal submits the program code to the management node. After receiving the program code submitted by the user terminal, the management node determines the program code as the program code of the DSL corresponding to the target traffic analysis task.

In a second case, a user terminal displays a program purchase interface, where the program purchase interface includes description information of a plurality of traffic analysis tasks. The management node receives a program purchase request submitted by the user terminal, where the program purchase request carries an identifier of the target traffic analysis task. The management node obtains, based on the identifier of the target traffic analysis task, the program code of the DSL corresponding to the target traffic analysis task from stored program code of DSLs corresponding to the plurality of traffic analysis tasks.

In other words, the cloud platform provides a program purchase function. The user can view a traffic analysis object, a type of each traffic analysis task, and a traffic analysis result that correspond to each of the plurality of traffic analysis tasks provided by the cloud platform, and then select a target traffic analysis task whose traffic analysis result matches a traffic analysis result expected by the user. Then, the management node directly obtains, based on the identifier of the target traffic analysis task, the program code of the DSL corresponding to the target traffic analysis task. In this way, the user can directly purchase the program code from the cloud platform, and does not need to perform program code edition. This helps reduce costs and time spent by the user in the program code edition.

After obtaining the program code of the DSL corresponding to the target traffic analysis task, the management node performs syntax analysis on the program code, to obtain a syntax analysis result. When the syntax analysis result indicates that the program code has no syntax error, the management node performs semantic analysis on the program code, to obtain a semantic analysis result. When the semantic analysis result indicates that the program code has no semantic error, the management node determines that the verification of the program code succeeds.

After obtaining the program code, the management node first verifies the program code, and when the verification of the program code succeeds, the traffic analysis engine performs traffic analysis, so that accuracy of the traffic analysis can be further improved.

The target engine performs just-in-time compilation on the program code, to obtain executable code corresponding to the program code. The target engine runs the executable code, to obtain the traffic analysis result.

The target engine determines, based on the program code, a plurality of operators used to execute the target traffic analysis task, orchestrates a sequence of the plurality of operators, to obtain an operator orchestration result, and determines the operator orchestration result as the executable code corresponding to the program code.

In other words, the entire cloud computing environment is used as a unified language interface, and all the program code obtained by the management node at an upper layer is in the DSL language format. Through just-in-time compilation, each traffic analysis engine at a lower layer dynamically converts the unified DSL language format into a language format that can be run by the traffic analysis engine. In this way, processor differences between the traffic analysis engines at the lower layer are shielded, and the unified DSL language format is used for traffic analysis in the cloud computing environment.

The target engine performs traffic analysis on the target traffic by running the plurality of operators based on the operator orchestration result, to obtain the traffic analysis result.

Optionally, the program code includes a result filter condition. In this way, after the target engine determines the traffic analysis result based on the program code, the target engine can further filter the traffic analysis result based on the result filter condition included in the program code, and send a filtered traffic analysis result to the management node. After receiving the filtered traffic analysis result sent by the target engine, the management node sends the filtered traffic analysis result to the user terminal. The user terminal receives and displays the filtered traffic analysis result sent by the management node.

According to a second aspect, a cloud platform is provided. The cloud platform includes a management node and a plurality of traffic analysis engines, the management node is configured to implement the traffic analysis method in the first aspect, and the plurality of traffic analysis engines are configured to implement the traffic analysis method in the first aspect.

According to a third aspect, a computing device cluster is provided. The computing device cluster includes at least one computing device, each computing device includes a processor and a memory, and a processor of the at least one computing device is configured to execute instructions stored in a memory of the at least one computing device, so that the computing device cluster performs the traffic analysis method provided in the first aspect.

Optionally, each computing device may further include a communication bus, and the communication bus is configured to establish a connection between the processor and the memory of each computing device.

According to a fourth aspect, a computer-readable storage medium is provided. The storage medium stores instructions, and when the instructions are run in a computing device cluster, the computing device cluster is enabled to perform steps of the traffic analysis method in the first aspect.

According to a fifth aspect, a computer program product including instructions is provided. When the instructions are run in a computing device cluster, the computing device cluster is enabled to perform steps of the traffic analysis method in the first aspect.

Technical effects achieved in the second aspect, the third aspect, the fourth aspect, and the fifth aspect are similar to those achieved by corresponding technical means in the first aspect. Details are not described herein again.

### BRIEF DESCRIPTION OF DRAWINGS

FIG. 1 is a diagram of a system architecture according to an embodiment of this application;
FIG. 2 is a flowchart of a traffic analysis method according to an embodiment of this application;
FIG. 3 is a diagram of a traffic analysis procedure according to an embodiment of this application;
FIG. 4 is a diagram of managing, by a management node, traffic analysis results corresponding to traffic analysis engines in a unified manner according to an embodiment of this application;
FIG. 5 is a diagram of an architecture of a cloud platform according to an embodiment of this application;
FIG. 6 is a diagram of a structure of a computing device according to an embodiment of this application;
FIG. 7 is a diagram of an architecture of a computing device cluster according to an embodiment of this application;
FIG. 8 is a diagram of a connection between computing devices according to an embodiment of this application;
FIG. 9 is a diagram of a structure of a management node according to an embodiment of this application; and
FIG. 10 is a diagram of a structure of a target engine according to an embodiment of this application.

### DESCRIPTION OF EMBODIMENTS

To make objectives, technical solutions, and advantages of this application clearer, the following further describes implementations of this application in detail with reference to the accompanying drawings.

Before a traffic analysis method provided in embodiments of this application is described in detail, terms, a service scenario, and a system architecture in embodiments of this application are first described.

For ease of understanding, the terms in embodiments of this application are first described.

A domain-specific language (domain-specific language, DSL) is a computer language that focuses on a program domain. Compared with a common general-purpose language (general-purpose language, GPL) that is applicable to a plurality of program domains, the DSL is applicable only to some specific program domains.

**Just-in-time compilation (just-in-time compiler, JIT compiler)** means converting program code or bytecode into machine code, to be specific, converting the program code or the bytecode into corresponding executable code, so that an engine can run the executable code. The just-in-time compilation may also be referred to as dynamic translation or runtime compilation.

The executable code obtained through just-in-time compilation is stored in a memory of the engine. When the program code or the bytecode is invoked again, the engine can directly run the stored executable code, and does not need to convert the program code or the bytecode into the machine code, so that performance of the engine can be improved.

Then, the service scenario and the system architecture in embodiments of this application are described.

The traffic analysis method provided in embodiments of this application can be applied to a plurality of scenarios, for example, abnormal traffic detection, advanced persistent threat (advanced persistent threat, APT) attack detection, a scanning attack, a carpet-bombing attack, account cracking, analysis of malicious traffic such as a botnet, a Trojan horse, and a worm, traffic compliance analysis, application traffic identification, network asset collection, proactive high-risk asset discovery, proactive vulnerability discovery, and traffic defense and cleaning.

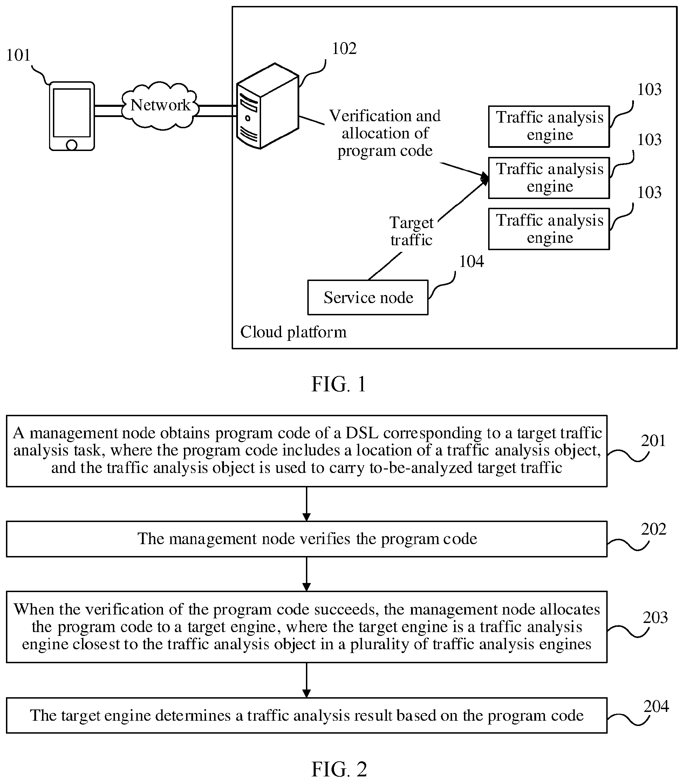

FIG. 1 is a diagram of an architecture of a traffic analysis system according to an embodiment of this application. The system includes a user terminal 101, a management node 102, and a plurality of traffic analysis engines 103 (three traffic analysis engines are used as an example for description in FIG. 1). The management node 102 and the plurality of traffic analysis engines 103 form a cloud platform.

Optionally, the system further includes a plurality of service nodes 104 (one service node is used as an example for description in FIG. 1). The management node 102, the plurality of traffic analysis engines 103, and the plurality of service nodes 104 form a cloud platform.

The user terminal 101 is communicatively connected to the management node 102. The communication connection may be a wired connection or a wireless connection. This is not limited in this embodiment of this application.

The user terminal 101 submits program code of a DSL corresponding to a target traffic analysis task to the management node 102, where the program code includes a location of a traffic analysis object, so that the management node 102 can obtain the program code of the DSL corresponding to the target traffic analysis task. Alternatively, the user terminal 101 submits a program purchase request to the management node 102, where the program purchase request carries an identifier of a target traffic analysis task. The management node 102 obtains, based on the identifier of the target traffic analysis task, program code of a DSL corresponding to the target traffic analysis task from program code of DSLs corresponding to a plurality of traffic analysis tasks.

The traffic analysis object is a service node configured to carry to-be-analyzed target traffic in the plurality of service nodes 104.

After obtaining the program code of the DSL corresponding to the target traffic analysis task, the management node 102 verifies the program code. When the verification of the program code succeeds, the management node 102 allocates the program code to a target engine 103 closest to the traffic analysis object. After receiving the program code allocated by the management node 102, the target engine 103 performs just-in-time compilation on the program code to obtain executable code corresponding to the program code, obtains the target traffic carried by the service node 104, and further analyzes the target traffic based on the executable code to obtain a traffic analysis result. Then, the target engine 103 sends the traffic analysis result to the management node 102. After receiving the traffic analysis result sent by the target engine 103, the management node 102 sends the traffic analysis result to the user terminal 101. The user terminal 101 receives and displays the traffic analysis result sent by the management node 102.

The user terminal 101 may be any electronic product that can perform human-computer interaction with a user, for example, through voice interaction or by using a keyboard, a touchpad, a touchscreen, a remote control, or a handwriting device. For example, the user terminal 101 may be a personal computer (personal computer, PC), a mobile phone, a smartphone, a personal digital assistant (personal digital assistant, PDA), a palmtop computer, a tablet computer, or the like.

The cloud platform may be a server cluster or a distributed system including a plurality of physical servers, may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform, or may be a cloud computing service center.

A person skilled in the art should understand that the user terminal 101 and the cloud platform are merely examples.

It should be noted that the service scenario and the system architecture described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the system architecture evolves and a new service scenario emerges.

The following describes in detail the traffic analysis method provided in embodiments of this application.

FIG. 2 is a flowchart of a traffic analysis method according to an embodiment of this application. The method is applied to a cloud platform, and the cloud platform includes a management node and a plurality of traffic analysis engines. Refer to FIG. 2. The method includes the following steps.

**Step 201:** The management node obtains program code of a DSL corresponding to a target traffic analysis task, where the program code includes a location of a traffic analysis object, and the traffic analysis object is used to carry to-be-analyzed target traffic.

Optionally, the cloud platform further includes a plurality of service nodes, and the traffic analysis object is a service node configured to carry the to-be-analyzed target traffic in the plurality of service nodes.

In different cases, manners in which the management node obtains the program code of the DSL corresponding to the target traffic analysis task are different. The following separately provides descriptions by using the following two cases.

In a first case, the management node receives the program code of the DSL corresponding to the target traffic analysis task, where the program code is submitted by a user terminal.

The user terminal submits the program code to the management node, where the program code is the program code of the DSL corresponding to the target traffic analysis task. After receiving the program code submitted by the user terminal, the management node determines the program code as the program code of the DSL corresponding to the target traffic analysis task.

When the user terminal detects a traffic analysis operation of a user, the user terminal displays a program editing interface, where the program editing interface includes a program code editing box. The user can enter the program code in the program code editing box. When detecting a confirmation operation of the user, the user terminal submits the program code to the management node. After receiving the program code submitted by the user terminal, the management node determines the program code as the program code of the DSL corresponding to the target traffic analysis task.

The traffic analysis operation of the user may be triggered through voice interaction, or may be triggered by using a click operation on a traffic analysis button. The confirmation operation of the user may be triggered through voice interaction, or may be triggered by using a click operation on a submit button in the program editing interface.

It should be noted that, that the user terminal submits the program code to the management node mentioned above is merely an example. In some other embodiments, the user terminal displays a program editing interface, where the program editing interface includes a program code editing box. A user can enter a user-defined expression in the program code editing box, where the user-defined expression includes the traffic analysis object and a type of a traffic analysis task. When detecting a confirmation operation of the user, the user terminal submits the user-defined expression to the management node. After receiving the user-defined expression submitted by the user terminal, the management node converts, based on a related algorithm, the user-defined expression into the program code of the DSL corresponding to the target traffic analysis task.

In a second case, a user terminal displays a program purchase interface, where the program purchase interface includes description information of a plurality of traffic analysis tasks. The management node receives a program purchase request submitted by the user terminal, where the program purchase request carries an identifier of the target traffic analysis task, and the target traffic analysis task is one of the plurality of traffic analysis tasks. The management node obtains, based on the identifier of the target traffic analysis task, the program code of the DSL corresponding to the target traffic analysis task from program code of DSLs corresponding to the plurality of traffic analysis tasks.

When detecting a program purchase operation of a user, the user terminal sends a traffic analysis task query request to the management node. After receiving the traffic analysis task query request sent by the user terminal, the management node sends the stored description information of the plurality of traffic analysis tasks to the user terminal. After receiving the description information of the plurality of traffic analysis tasks sent by the management node, the user terminal displays the program purchase interface, where the program purchase interface includes the description information of the plurality of traffic analysis tasks. The user can select description information of the target traffic analysis task from the description information of the plurality of traffic analysis tasks. When detecting a confirmation operation of the user, the user terminal sends the program purchase request to the management node, where the program purchase request carries the identifier of the target traffic analysis task.

The management node stores a correspondence between an identifier of a traffic analysis task and program code. Therefore, after receiving the program purchase request submitted by the user terminal, the management node can obtain, based on the identifier of the target traffic analysis task carried in the program purchase request and the correspondence between an identifier of a traffic analysis task and program code, the program code of the DSL corresponding to the target traffic analysis task.

Description information of a traffic analysis task includes a traffic analysis object, a type of the traffic analysis task, and a traffic analysis result. Certainly, during actual application, the description information of the traffic analysis task may further include other information. This is not limited in this embodiment of this application.

An identifier of a traffic analysis task is used to uniquely identify the traffic analysis task. The identifier of the traffic analysis task is a traffic analysis object of the traffic analysis task, a type of the traffic analysis task, a number of the traffic analysis task, or the like, or is obtained by combining the information.

In other words, the cloud platform provides a program purchase function. The user can view a traffic analysis object, a type of each traffic analysis task, and a traffic analysis result that correspond to each of the plurality of traffic analysis tasks provided by the cloud platform, and then select a target traffic analysis task whose traffic analysis result matches a traffic analysis result expected by the user. Then, the management node directly obtains, based on the identifier of the target traffic analysis task, the program code of the DSL corresponding to the target traffic analysis task. In this way, the user can directly purchase the program code from the cloud platform, and does not need to perform program code edition. This helps reduce costs and time spent by the user in the program code edition.

For example, the program code corresponding to the target traffic analysis task obtained by the management node is: {select top 10 srcip from dstip=1.1.1.1/29 every minute to dest report}, that is, the program code means obtaining a list of top 10 source addresses that are used to access a destination address 1.1.1.1/29 every minute. For another example, the program code corresponding to the target traffic analysis task obtained by the management node is: {get application traffic from srcip=2.2.2.2 every second with application lib xxx def lib{port=80 append service type:web}}, that is, the program code means determining a protocol type corresponding to an application program whose source address is 2.2.2.2 every second.

**Step 202:** The management node verifies the program code.

After obtaining the program code of the DSL corresponding to the target traffic analysis task, the management node performs syntax analysis on the program code, to obtain a syntax analysis result, where the syntax analysis result indicates whether the program code has a syntax error. When the syntax analysis result indicates that the program code has no syntax error, the management node performs semantic analysis on the program code, to obtain a semantic analysis result, where the semantic analysis result indicates whether the program code has a semantic error. When the semantic analysis result indicates that the program code has no semantic error, the management node determines that the verification of the program code succeeds.

An implementation process in which the management node performs syntax analysis on the program code includes: The management node compares a language format of the program code with a reference language format. If the language format of the program code matches the reference language format, the management node determines that the program code has no syntax error. If the language format of the program code does not match the reference language format, the management node determines that the program code has a syntax error.

The reference language format is preset. In addition. the reference language format can further be adjusted based on different requirements.

When the syntax analysis result indicates that the program code has a syntax error, the management node sends the syntax analysis result to the user terminal. The user terminal receives and displays the syntax analysis result sent by the management node, so that the user performs syntax correction on the program code based on the syntax analysis result, to obtain syntactically corrected program code. Alternatively, the management node directly performs syntax correction on the program code, to obtain syntactically corrected program code. In other words, when the management node determines that the program code has a syntax error. the user terminal performs syntax correction on the program code, or the management node directly performs syntax correction on the program code.

That the program code has a syntax error means that the program code has at least one of a spelling error, a punctuation error, an abnormal line feed, and the like.

When the syntax analysis result indicates that the program code has no syntax error, the management node performs semantic analysis on the program code, to determine whether the program code has a semantic error. For example, the management node precompiles the program code based on a related algorithm to obtain a precompilation result corresponding to the program code, and then runs the precompilation result to obtain a pre-running result. Then, the management node determines the semantic analysis result based on the pre-running result.

Optionally, when the pre-running result is any one of a running exception, a running timeout, a forcible termination, or the like, it is determined that the program code has a semantic error. Otherwise, it is determined that the program code has no semantic error.

When the semantic analysis result indicates that the program code has a semantic error, the management node determines that the verification of the program code fails. In this case, the management node directly performs semantic correction on the program code, to obtain semantically corrected program code. When the semantic analysis result indicates that the program code has no semantic error, the management node determines that the verification of the program code succeeds.

Optionally, when the management node determines that the program code has no semantic error, the management node can further optimize the program code, to obtain optimized program code. For example, the management node performs code optimization on the program code whose verification succeeds. To be specific, when ensuring that the target traffic analysis task indicated by the program code remains unchanged, the management node performs code optimization on the program code by using different coding methods, to avoid redundant calculation. Alternatively, the management node performs algorithm optimization on the program code whose verification succeeds. To be specific, when ensuring that the target traffic analysis task indicated by the program code remains unchanged, the management node performs algorithm optimization on the program code by using different algorithms, to reduce calculation complexity.

**Step 203:** When the verification of the program code succeeds, the management node allocates the program code to a target engine, where the target engine is a traffic analysis engine closest to the traffic analysis object in the plurality of traffic analysis engines.

Based on the foregoing descriptions, the program code includes the location of the traffic analysis object. Therefore, when the management node determines that the verification of the program code succeeds, the management node can extract the location of the traffic analysis object from the program code. Then, the management node selects the traffic analysis engine closest to the traffic analysis object from the plurality of traffic analysis engines based on the location of the traffic analysis object and a location of each of the plurality of traffic analysis engines, determines the selected traffic analysis engine as the target engine, and then allocates the program code to the target engine.

In other words, the management node determines a distance between the traffic analysis object and each of the plurality of traffic analysis engines based on a related algorithm, to obtain a plurality of distances, then determines a traffic analysis engine corresponding to a smallest distance in the plurality of distances as the target engine, and allocates the program code to the target engine.

The management node determines the traffic analysis engine closest to the traffic analysis object in the plurality of traffic analysis engines as the target engine, and allocates the program code to the target engine. This helps the target engine subsequently obtain, more quickly, the target traffic carried by the traffic analysis object. Therefore, efficiency of performing traffic analysis on the target traffic by the target engine is improved.

Optionally, in addition to the location of the traffic analysis object, the management node can further extract other information from the program code, for example, whether to associate another traffic analysis object in a same domain for intra-domain traffic analysis, and whether to associate another traffic analysis object in a different domain for interdomain traffic analysis.

**Step 204:** The target engine determines a traffic analysis result based on the program code.

The target engine performs just-in-time compilation on the program code, to obtain executable code corresponding to the program code. The target engine runs the executable code, to obtain the traffic analysis result.

In some embodiments, after receiving the program code allocated by the management node, the target engine performs just-in-time compilation on the program code according to the following steps (11) to (13), to obtain the executable code corresponding to the program code.

(11) The target engine determines, based on the program code, a plurality of operators used to execute the target traffic analysis task.

The target engine parses the program code, to obtain a type of the target traffic analysis task. The target engine selects, from operators included in the target engine based on the type of the target traffic analysis task, the plurality of operators used to execute the target traffic analysis task.

The target engine parses the program code based on a related algorithm, to obtain key information of the program code in different dimensions, and further combines the key information of the program code in the different dimensions, to obtain the type of the target traffic analysis task.

Optionally, the target engine includes a multi-layer parsing model, and the target engine can parse the program code by using the multi-layer parsing model, to obtain the type of the target traffic analysis task. In the multi-layer parsing model, each layer corresponds to a different protocol type. The program code is parsed by using different protocol types, so that the key information of the program code in the different dimensions can be obtained. In the multi-layer parsing model, an input of a first layer is the program code, and inputs of remaining layers are all outputs of previous layers. In other words, the remaining layers further parse the outputs of the previous layers. In this way, the key information that is of the program code in the different dimensions and that is output by other layers is combined in an output of a last layer in the multi-layer parsing model, to obtain the type of the target traffic analysis task.

The target engine includes a plurality of different operators, and the different operators are used to perform traffic analysis on the target traffic in different manners. The target engine selects, from the operators included in the target engine based on the type of the target traffic analysis task, the plurality of operators used to execute the target traffic analysis task.

For example, the target engine includes a differentiation operator, a gradient operator, a dispersion operator, a sort operator, a statistical operator, an average value operator, a maximum value operator, and the like.

It is assumed that the target engine determines that the type of the target traffic analysis task is obtaining a list of top 10 computer devices that access the traffic analysis object within one minute. In this case, the operators that are used to execute the target traffic analysis task and that are selected by the target engine are the statistical operator and the sort operator.

Optionally, because the target engine is determined based on the location of the traffic analysis object, and the type of the target traffic analysis task is not considered, the operator used to execute the target traffic analysis task may not exist in the operators included in the target engine. To ensure that the target engine can perform traffic analysis on the target traffic to obtain the traffic analysis result, the program code further includes the plurality of operators used to execute the target traffic analysis task. In other words, when submitting the program code to the management node, the user terminal adds, to the program code, the plurality of operators used to execute the target traffic analysis task. In this way, after receiving the program code allocated by the management node, the target engine can directly extract, from the program code, the plurality of operators used to execute the target traffic analysis task, to improve efficiency of performing traffic analysis on the target traffic by the target engine.

(12) The target engine orchestrates a sequence of the plurality of operators, to obtain an operator orchestration result.

After selecting the plurality of operators used to execute the target traffic analysis task, the target engine orchestrates the sequence of the plurality of operators based on the type of the target traffic analysis task, to obtain the operator orchestration result.

A language format of the operator orchestration result is related to a hardware architecture of the target engine.

Because processors corresponding to all of the plurality of traffic analysis engines are different, language formats that can be run by the traffic analysis engines are also different. However, all program code corresponding to the target traffic analysis task obtained by the management node is in a DSL language format. To ensure that the target engine can perform traffic analysis on the target traffic, after receiving the program code in the DSL language format allocated by the management node, the target engine first selects, according to the foregoing steps (11) and (12), the plurality of operators used to execute the target traffic analysis task, and then orchestrates the sequence of the plurality of operators based on a language format that can be run by the target engine.

In other words, an entire cloud computing environment is used as a unified language interface, and all the program code obtained by the management node at an upper layer is in the DSL language format. Through just-in-time compilation, each traffic analysis engine at a lower layer dynamically converts the unified DSL language format into a language format that can be run by the traffic analysis engine. In this way, processor differences between the traffic analysis engines at the lower layer are shielded, and the unified DSL language format is used for traffic analysis in the cloud computing environment.

For example, the processor corresponding to the traffic analysis engine is any one of an X86 processor, an advanced reduced instruction set computing machine (advanced RISC machine, ARM) processor, a network process (network process, NP) processor, and an application-specific integrated circuit (application-specific integrated circuit, ASIC) processor.

It is assumed that a processor corresponding to the target engine is the ARM processor. The type of the target traffic analysis task is obtaining the list of top 10 computer devices that access the traffic analysis object within one minute, and the operators that are used to execute the target traffic analysis task and that are selected by the target engine are the statistical operator and the sort operator. When executing the target traffic analysis task, the target engine needs to first collect statistics on traffic consumed by each computer device for accessing the traffic analysis object within one minute, and then sort the traffic consumed by each computer device. In addition, the language format that can be run by the target engine is an ARM language format. Therefore, the operator orchestration result determined by the target engine is: [statistical operator in the ARM language format; sort operator in the ARM language format].

(13) The target engine determines the operator orchestration result as the executable code corresponding to the program code.

After determining the operator orchestration result according to the foregoing steps, the target engine determines the operator orchestration result as the executable code corresponding to the program code.

In some embodiments, the target engine runs the executable code according to the following steps (21) and (22), to obtain the traffic analysis result.

(21) The target engine obtains the target traffic carried by the traffic analysis object.

Based on the foregoing descriptions, the program code includes the location of the traffic analysis object. Therefore, after receiving the program code allocated by the management node, the target engine can directly determine, from the plurality of service nodes based on the location of the traffic analysis object included in the program code, the service node that carries the target traffic, and further obtain, in a manner such as optical splitting, mirroring, or mapping, the target traffic carried by the traffic analysis object.

(22) The target engine performs traffic analysis on the target traffic by running the plurality of operators based on the operator orchestration result, to obtain the traffic analysis result.

The target traffic carried by the traffic analysis object includes different types of traffic flowing into the traffic analysis object when each computer device accesses the traffic analysis object, and also includes different types of traffic flowing out of the traffic analysis object when the traffic analysis object responds to each computer device. Therefore, after obtaining the target traffic carried by the traffic analysis object, the target engine needs to first filter the target traffic based on the target traffic analysis task, to obtain traffic used to execute the target traffic analysis task. In other words, the target engine determines, based on the target traffic analysis task, a reference source address and a reference destination address of the traffic used to execute the target traffic analysis task, and then selects, from the target traffic, traffic whose source address is the same as the reference source address and whose destination address is also the same as the reference destination address, to obtain the traffic used to execute the target traffic analysis task.

For example, program code used by the target engine to filter the target traffic is: {var webtodb traffic=select tcp:3399 from 1.1.1.1/24 to 2.2.2.2}, that is, the program code means that the reference source address is 1.1.1.1/24, and the reference destination address is 2.2.2.2.

Then, the target engine sequentially analyzes, by using the plurality of operators based on the operator orchestration result, the traffic used to execute the target traffic analysis task, to obtain the traffic analysis result. In the operator orchestration result, an input of a first operator is the traffic used to execute the target traffic analysis task, and inputs of remaining operators are all outputs of previous operators. In other words, the remaining operators further analyze the outputs of the previous operators. In this way, analysis results output by other operators are combined in an output of a last operator in the operator orchestration result, to obtain the traffic analysis result.

Optionally, the program code includes a result filter condition. In this way, after the target engine determines the traffic analysis result based on the program code, the target engine can further filter the traffic analysis result based on the result filter condition included in the program code, and send a filtered traffic analysis result to the management node. After receiving the filtered traffic analysis result sent by the target engine, the management node sends the filtered traffic analysis result to the user terminal. The user terminal receives and displays the filtered traffic analysis result sent by the management node.

The user terminal displays the filtered traffic analysis result in a file form, or displays the filtered traffic analysis result in an icon form. Certainly, during actual application, the user terminal can alternatively display the filtered traffic analysis result in another manner. This is not limited in this embodiment of this application.

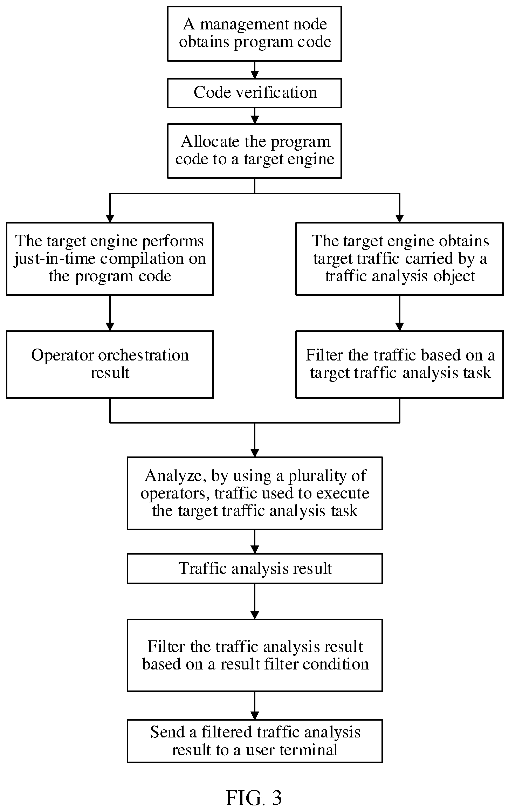

For example, FIG. 3 is a diagram of a traffic analysis procedure according to an embodiment of this application. In FIG. 3, a management node obtains program code, and verifies the program code. When the verification of the program code succeeds, the program code is allocated to a target engine based on a location of a traffic analysis object. After receiving the program code, the target engine performs just-in-time compilation on the program code based on a language format that can be run by the target engine, to obtain an operator orchestration result. Then, the target engine obtains target traffic carried by the traffic analysis object, filters the target traffic based on a target traffic analysis task to obtain traffic used to execute the target traffic analysis task, and then analyzes, by using a plurality of operators, the traffic used to execute the target traffic analysis task, to obtain a traffic analysis result. Finally, the target engine filters the traffic analysis result based on a result filter condition included in the program code, and sends a filtered traffic analysis result to the management node. After receiving the filtered traffic analysis result sent by the target engine, the management node sends the filtered traffic analysis result to a user terminal.

It should be noted that, that the target engine filters the traffic analysis result based on the result filter condition, and sends the filtered traffic analysis result to the management node, so that the user terminal receives the traffic analysis result corresponding to the user terminal sent by the management node is merely an example. In some other embodiments, a plurality of traffic analysis engines are deployed at any location in a tree structure in an entire cloud computing environment. Each of the plurality of traffic analysis engines performs traffic analysis according to the foregoing steps, to obtain a traffic analysis result, and then sends the corresponding traffic analysis result to the management node. After receiving traffic analysis results sent by the traffic analysis engines, the management node manages the traffic analysis results corresponding to the traffic analysis engines in a unified manner. Then, the user terminal obtains, based on traffic analysis result obtaining permission corresponding to the user terminal, the traffic analysis result corresponding to the user terminal from the traffic analysis results managed by the management node in the unified manner. In other words, the user terminal can passively receive the traffic analysis result corresponding to the user terminal, and can also actively obtain, based on the traffic analysis result obtaining permission, the traffic analysis result corresponding to the user terminal from the management node.

For example, the management node aggregates traffic analysis results corresponding to traffic analysis engines in a same domain. Certainly, during actual application, the management node can alternatively manage, in another manner, the traffic analysis results corresponding to the traffic analysis engines in the unified manner. This is not limited in this embodiment of this application.

The traffic analysis result obtaining permission corresponding to the user terminal is determined by the management node based on the obtained program code. For example, the management node determines the traffic analysis object included in the program code as an obtaining object corresponding to the user terminal. In this way, the user terminal can obtain, based on the obtaining object indicated by the obtaining permission, the traffic analysis result corresponding to the obtaining object only from the traffic analysis results managed by the management node in the unified manner.

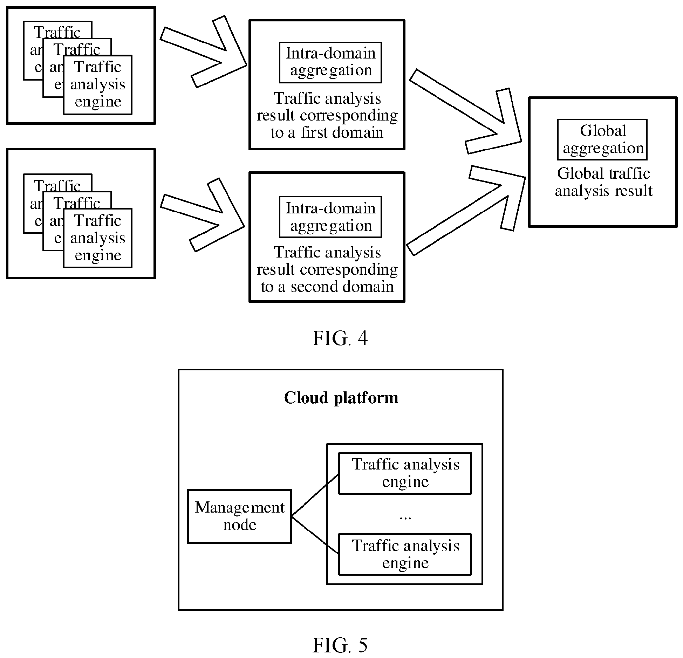

For example, FIG. 4 is a diagram of managing, by a management node, traffic analysis results corresponding to traffic analysis engines in a unified manner according to an embodiment of this application. In FIG. 4, a cloud platform includes six traffic analysis engines. The management node divides the six traffic analysis engines into two domains: a first domain and a second domain. The first domain and the second domain each include three traffic analysis engines. The management node first performs intra-domain aggregation on traffic analysis results corresponding to traffic analysis engines located in a same domain, to obtain a traffic analysis result corresponding to the first domain and a traffic analysis result corresponding to the second domain. Then, the management node performs global aggregation on the traffic analysis result corresponding to the first domain and the traffic analysis result corresponding to the second domain, to obtain a global traffic analysis result corresponding to the entire cloud platform.

Optionally, the program code further includes traffic analysis start time and traffic analysis duration. The traffic analysis start time is time at which the target engine starts to run executable code corresponding to the program code. The traffic analysis duration is duration from obtaining the program code by the management node to outputting the traffic analysis result by the target engine. In other words, when submitting the program code to the management node, the user terminal adds the traffic analysis start time and the traffic analysis duration to the program code. In this way, after receiving the program code submitted by the user terminal, the management node first locally stores the program code, and then allocates the program code to the target engine when the traffic analysis start time arrives, so that the target engine can perform traffic analysis periodically, and output the traffic analysis result when the traffic analysis duration expires.

It should be noted that, that the program code includes the location of the traffic analysis object, a plurality of operators used to execute the target traffic analysis task, the result filter condition, and the traffic analysis start time mentioned above is merely an example. During actual application, the program code can further include other information, for example, time consumed by the target engine to execute the target traffic analysis task and execution precision; for another example, a priority of executing each target traffic analysis task by a target engine when a plurality of target traffic analysis tasks are allocated to the same target engine.

In this embodiment of this application, the cloud platform includes the management node and the traffic analysis engines. The management node is configured to obtain the program code corresponding to the target traffic analysis task, and the traffic analysis engine is configured to perform traffic analysis based on the program code. In other words, in this embodiment of this application, after the management node in the cloud platform obtains the program code corresponding to the target traffic analysis task, the traffic analysis engine may directly analyze traffic in the cloud platform, and there is no need to first copy to-be-analyzed traffic based on a packet capture condition, and then send mirrored traffic to a traffic analysis device deployed outside the cloud platform for traffic analysis. Therefore, timeliness of traffic analysis can be improved.

In addition, after obtaining the program code, the management node first verifies the program code, and when the verification of the program code succeeds, the traffic analysis engine performs traffic analysis, so that accuracy of the traffic analysis can be further improved. In addition, all program code corresponding to the target traffic analysis task obtained by the management node is in a DSL language format. Therefore, an entire cloud computing environment is used as a unified language interface, so that different traffic analysis engines correspond to the unified language format. In other words, according to the method provided in this embodiment of this application, real-time and accurate traffic analysis can be performed in the cloud computing environment by using the unified DSL language format.

FIG. 5 is a diagram of an architecture of a cloud platform according to an embodiment of this application. The cloud platform includes a management node and a plurality of traffic analysis engines. A communication connection is established between the management node and the plurality of traffic analysis engines.

The management node is configured to: obtain, according to the traffic analysis method provided in embodiments of this application, program code of a domain-specific language DSL corresponding to a target traffic analysis task, where the program code includes a location of a traffic analysis object, and the traffic analysis object is used to carry to-be-analyzed target traffic; and verify the program code. When the verification of the program code succeeds, the management node allocates the program code to a target engine, where the target engine is a traffic analysis engine closest to the traffic analysis object in the plurality of traffic analysis engines.

The target engine in the plurality of traffic analysis engines is configured to determine a traffic analysis result based on the program code.

Both the management node and the traffic analysis engine in FIG. 5 may be implemented by software, or may be implemented by hardware. For example, the following describes an implementation of the management node. Similarly, for an implementation of the traffic analysis engine, refer to the implementation of the management node.

The management node may include code (an application program) run on a computing instance. The computing instance may be at least one of computing devices such as a physical host, a virtual machine, and a container. Further, there may be one or more computing devices. For example, the management node may include code run on a plurality of hosts/virtual machines/containers. It should be noted that the plurality of hosts/virtual machines/containers used to run the code may be distributed in a same region (region), or may be distributed in different regions. The plurality of hosts/virtual machines/containers used to run the code may be distributed in a same available zone (available zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. Interconnection between VPCs is implemented through the communication gateway.

The management node may include at least one computing device, for example, a server. Alternatively, the management node may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field programmable logic gate array (field programmable gate array, FPGA), generic array logic (generic array logic, GAL), or any combination thereof.

The plurality of computing devices included in the management node may be distributed in a same region, or may be distributed in different regions. The plurality of computing devices included in the management node may be distributed in a same AZ, or may be distributed in different AZs. Similarly, the plurality of computing devices included in the management node may be distributed in a same VPC, or may be distributed in a plurality of VPCs. The plurality of computing devices may be any combination of computing devices such as the server, the ASIC, the PLD, the CPLD, the FPGA, and the GAL.

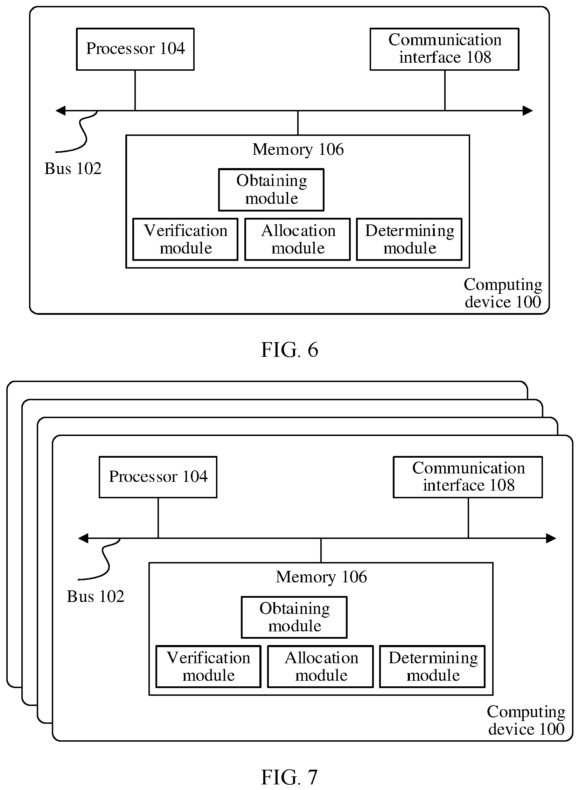

An embodiment of this application further provides a computing device 100. The computing device 100 may become a part or all of a management node, or may become a part or all of a traffic analysis engine. As shown in FIG. 6, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus 102 may be classified into an address bus, a data bus, a control bus, and the like. For ease of representation, only one line is used for representation in FIG. 6, but this does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (CPU), a graphics processing unit (graphics processing unit, GPU), a microprocessor (microprocessor, MP), a digital signal processor (digital signal processor, DSP), and an integrated circuit. The integrated circuit is, for example, an ASIC, a PLD, or a combination thereof. Optionally, the PLD is a CPLD, an FPGA, GAL, or any combination thereof.

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid state drive (solid state drive, SSD), or any other medium that can be used to carry or store expected program code in a form of an instruction or a data structure and that can be accessed by a computer, but is not limited thereto. The memory 106 exists independently, and is connected to the processor 104 through the bus 102, or the memory 106 is integrated with the processor 104.

The memory 106 stores executable program code, and the processor 104 executes the executable program code to implement functions of the management node and the traffic analysis engine, to implement the traffic analysis method provided in embodiments of this application. In other words, the memory 106 stores instructions used to perform the traffic analysis method.

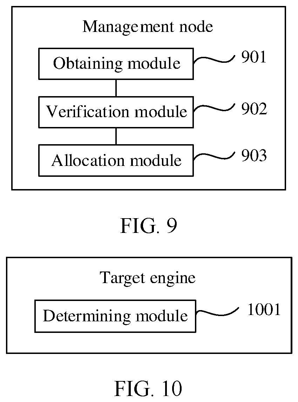

For example, the memory 106 stores the executable program code, and the processor 104 executes the executable program code to separately implement functions of the obtaining module, the verification module, and the allocation module in the management node shown in FIG. 9, or implement functions of the determining module in the target engine shown in FIG. 10. In this way, the traffic analysis method provided in embodiments of this application is implemented.

The communication interface 108 implements communication between the computing device 100 and another device or a communication network by using a transceiver module, for example, but not limited to a network interface card or a transceiver. The network interface includes a wired communication interface, or further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a computing device cluster. The computing device cluster includes a plurality of computing devices. The computing device may be a server, for example, a central server, an edge server, or a local server in a local data center. In some embodiments, the computing device may alternatively be a terminal device, for example, a desktop computer, a notebook computer, or a smartphone.

As shown in FIG. 7, the computing device cluster includes the plurality of computing devices 100. Memories 106 in the plurality of computing devices 100 in the computing device cluster may store same instructions used to perform the foregoing traffic analysis method.

In some possible implementations, memories 106 in the plurality of computing devices 100 in the computing device cluster each may alternatively store a part of instructions used to perform the foregoing traffic analysis method. In other words, a combination of the plurality of computing devices 100 may jointly execute all instructions used to perform the foregoing traffic analysis method. For example, the plurality of computing devices 100 include management nodes and a plurality of traffic analysis engines. A management node and a memory 106 of each traffic analysis engine each store a part of instructions used for the foregoing traffic analysis method. A combination of the management nodes and the plurality of traffic analysis engines can jointly execute all instructions for the foregoing traffic analysis method.

It should be noted that, the memories 106 in different computing devices 100 in the computing device cluster may store different instructions, which are respectively used to perform a part of functions of a management node or a target engine. In other words, the instructions stored in the memories 106 in different computing devices 100 may implement a function of a part or all of modules included in the management node or the target engine.

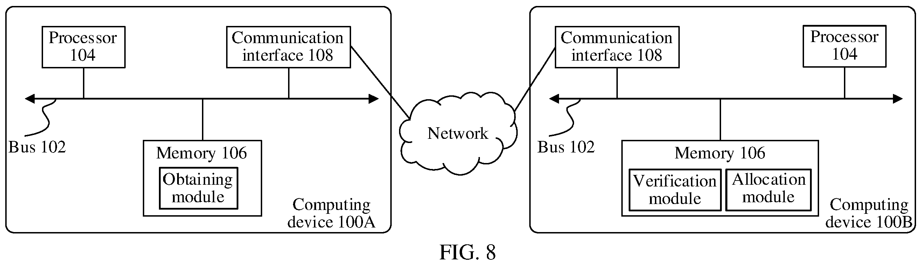

In some possible implementations, the one or more computing devices in the computing device cluster may be connected through a network. The network may be a wide area network, a local area network, or the like. FIG. 8 shows a possible implementation. As shown in FIG. 8, two computing devices 100A and 100B are connected through a network. Specifically, each computing device is connected to the network through a communication interface of the computing device. In this type of possible implementation, a memory 106 in the computing device 100A stores instructions for performing a function of a part of modules included in a management node or a target engine. In addition, a memory 106 in the computing device 100B stores instructions for performing a function of another part of modules included in the management node or the target engine.

For example, the memory 106 in the computing device 100A stores instructions for performing a function of an obtaining module included in the management node. In addition, the memory 106 in the computing device 100B stores instructions for performing functions of a verification module and an allocation module that are included in the management node.

It should be understood that a function of the computing device 100A shown in FIG. 8 may alternatively be completed by a plurality of computing devices 100. Similarly, a function of the computing device 100B may alternatively be completed by a plurality of computing devices 100.

FIG. 9 is a diagram of a structure of a management node according to an embodiment of this application. The management node is a management node included in a cloud platform, and the cloud platform further includes a plurality of traffic analysis engines. Refer to FIG. 9. The management node includes an obtaining module 901, a verification module 902, and an allocation module 903.

The obtaining module 901 is configured to obtain program code of a domain-specific language DSL corresponding to a target traffic analysis task, where the program code includes a location of a traffic analysis object, and the traffic analysis object is used to carry to-be-analyzed target traffic.

The verification module 902 is configured to verify the program code.

The allocation module 903 is configured to: when the verification of the program code succeeds, allocate the program code to a target engine, where the target engine is a traffic analysis engine closest to the traffic analysis object in the plurality of traffic analysis engines.

Optionally, the verification module 902 is specifically configured to:
perform syntax analysis on the program code, to obtain a syntax analysis result;
when the syntax analysis result indicates that the program code has no syntax error, perform semantic analysis on the program code, to obtain a semantic analysis result; and
when the semantic analysis result indicates that the program code has no semantic error, determine that the verification of the program code succeeds.

Optionally, the program code includes a result filter condition.

The management node further includes:
a receiving module, configured to receive a filtered traffic analysis result sent by the target engine, where the filtered traffic analysis result is obtained by the target engine by filtering a traffic analysis result based on the result filter condition; and
a sending module, configured to send the filtered traffic analysis result to a user terminal.

Optionally, the obtaining module 901 is specifically configured to:
receive a program purchase request submitted by the user terminal, where the program purchase request carries an identifier of the target traffic analysis task; and
obtain, based on the identifier of the target traffic analysis task, the program code of the DSL corresponding to the target traffic analysis task from stored program code of DSLs corresponding to a plurality of traffic analysis tasks.

It should be noted that, when the management node provided in the foregoing embodiment performs traffic analysis, division into the foregoing functional modules is merely used as an example for description. During actual application, the foregoing functions may be allocated to different functional modules for implementation based on a requirement. To be specific, an internal structure of the apparatus is divided into different functional modules, to implement all or a part of the functions described above. In addition, the management node provided in the foregoing embodiment belongs to a same concept as the traffic analysis method embodiment. For a specific implementation process, refer to the method embodiment. Details are not described herein again.

FIG. 10 is a diagram of a structure of a target engine according to an embodiment of this application. The target engine is a traffic analysis engine closest to a traffic analysis object in a plurality of traffic analysis engines included in a cloud platform, and the cloud platform further includes a management node. Refer to FIG. 10. The target engine includes a determining module 1001.

The determining module 1001 is configured to determine a traffic analysis result based on program code, where the program code is program code of a DSL allocated by the management node to the target engine, the program code includes a location of the traffic analysis object, and the traffic analysis object is used to carry to-be-analyzed target traffic.

Optionally, the determining module 1001 includes:
a compilation unit, configured to perform just-in-time compilation on the program code, to obtain executable code corresponding to the program code; and
a running unit, configured to run the executable code, to obtain the traffic analysis result.

Optionally, the compilation unit is specifically configured to:
determine, based on the program code, a plurality of operators used to execute a target traffic analysis task;
orchestrate a sequence of the plurality of operators, to obtain an operator orchestration result; and
determine the operator orchestration result as the executable code corresponding to the program code.

Optionally, the running unit is specifically configured to:
perform traffic analysis on the target traffic by running the plurality of operators based on the operator orchestration result, to obtain the traffic analysis result.

Optionally, the program code includes a result filter condition.

The target engine further includes:
a filtering module, configured to filter the traffic analysis result based on the result filter condition; and
a sending module, configured to send a filtered traffic analysis result to the management node.

It should be noted that, when the target engine provided in the foregoing embodiment performs traffic analysis, division into the foregoing functional modules is merely used as an example for description. During actual application, the foregoing functions may be allocated to different functional modules for implementation based on a requirement. To be specific, an internal structure of the apparatus is divided into different functional modules, to implement all or a part of the functions described above. In addition, the target engine provided in the foregoing embodiment belongs to a same concept as the traffic analysis method embodiment. For a specific implementation process, refer to the method embodiment. Details are not described herein again.

The obtaining module, the verification module, and the allocation module in the management node shown in FIG. 9, and the determining module in the target engine shown in FIG. 10 each may be implemented by software, hardware, or a combination of software and hardware. The following uses the obtaining module as an example to describe an implementation of the obtaining module. Similarly, for an implementation of the foregoing another module, refer to the implementation of the obtaining module.

The module is used as an example of a software functional unit, and the obtaining module may include code run on a computing instance. The computing instance may include at least one of a physical host, a virtual machine, and a container. Further, there may be one or more computing instances. For example, the obtaining module may include code run on a plurality of hosts/virtual machines/containers. It should be noted that the plurality of hosts/virtual machines/containers used to run the code may be distributed in a same region, or may be distributed in different regions. Further, the plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same VPC, or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware function unit, and the obtaining module may include at least one computing device, for example, a server. Alternatively, the obtaining module may be a device implemented by using an ASIC or a PLD, or the like. The PLD may be implemented by using a CPLD, an FPGA, GAL, or any combination thereof.

The plurality of computing devices included in the obtaining module may be distributed in a same region, or may be distributed in different regions. The plurality of computing devices included in the obtaining module may be distributed in a same AZ, or may be distributed in different AZs. Similarly, the plurality of computing devices included in the obtaining module may be distributed in a same VPC, or may be distributed in a plurality of VPCs. The plurality of computing devices may be any combination of computing devices such as a server, an ASIC, a PLD, a CPLD, an FPGA, and GAL.

In another embodiment, the obtaining module in the management node may be configured to perform any step in the foregoing traffic analysis method, the verification module in the management node may be configured to perform any step in the foregoing traffic analysis method, and the allocation module in the management node may be configured to perform any step in the foregoing traffic analysis method, steps that the obtaining module, the verification module, and the allocation module in the management node are responsible for implementing may be specified as required. The obtaining module, the verification module, and the allocation module in the management node respectively implement different steps in the foregoing traffic analysis method, so that all functions of the management node are implemented.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device in a computing device cluster to perform the traffic analysis method provided in embodiments of this application.

An embodiment of this application further provides a computer program product including instructions. The computer program product may be software or a program product that includes instructions and that can run on a computing device or be stored in any usable medium. When the computer program product runs on a computing device included in a computing device cluster, the computing device cluster is enabled to perform the traffic analysis method provided in embodiments of this application.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like. It should be noted that the computer-readable storage medium mentioned in embodiments of this application may be a non-volatile storage medium, in other words, may be a non-transitory storage medium.

It should be understood that "at least one" mentioned in this specification indicates one or more, and "a plurality of" indicates two or more. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, user personal information, and the like), data (including but not limited to data used for analysis, stored data, displayed data, and the like), and signals in embodiments of this application are all authorized by a user or fully authorized by all parties, and collection, use, and processing of related data need to conform to related laws, regulations, and standards of related countries and regions. For example, the program code in embodiments of this application is obtained under full authorization.

The foregoing descriptions are merely example embodiments of this application, but are not intended to limit this application. Any modification, equivalent replacement, or improvement made without departing from the scope of the invention as defined by the appended claims should fall within the protection scope of this application.

## Claims

1. A traffic analysis method, applied to a cloud platform, wherein the cloud platform comprises a management node and a plurality of traffic analysis engines, and the method comprises:
Obtaining(201), by the management node, program code of a domain-specific language, DSL corresponding to a target traffic analysis task, wherein the program code comprises a location of a traffic analysis object, and the traffic analysis object is used to carry to-be-analyzed target traffic;
verifying(202), by the management node, the program code;
when the verification of the program code succeeds, allocating(203), by the management node, the program code to a target engine, wherein the target engine is a traffic analysis engine closest to the traffic analysis object in the plurality of traffic analysis engines; and
determining(204), by the target engine, a traffic analysis result based on the program code.

2. The method according to claim 1, wherein the verifying, by the management node, the program code comprises:
performing, by the management node, syntax analysis on the program code, to obtain a syntax analysis result;
when the syntax analysis result indicates that the program code has no syntax error, performing, by the management node, semantic analysis on the program code, to obtain a semantic analysis result; and
when the semantic analysis result indicates that the program code has no semantic error, determining, by the management node, that the verification of the program code succeeds.

3. The method according to claim 1, wherein the determining, by the target engine, a traffic analysis result based on the program code comprises:
performing, by the target engine, just-in-time compilation on the program code, to obtain executable code corresponding to the program code; and
running, by the target engine, the executable code, to obtain the traffic analysis result.

4. The method according to claim 3, wherein the performing, by the target engine, just-in-time compilation on the program code, to obtain executable code corresponding to the program code comprises:
determining, by the target engine based on the program code, a plurality of operators used to execute the target traffic analysis task;
orchestrating, by the target engine, a sequence of the plurality of operators, to obtain an operator orchestration result; and
determining, by the target engine, the operator orchestration result as the executable code corresponding to the program code.

5. The method according to claim 4, wherein the running, by the target engine, the executable code, to obtain the traffic analysis result comprises:
performing, by the target engine, traffic analysis on the target traffic by running the plurality of operators based on the operator orchestration result, to obtain the traffic analysis result.

6. The method according to any one of claims 1 to 5, wherein the program code comprises a result filter condition; and
after the determining, by the target engine, a traffic analysis result based on the program code, the method further comprises:
filtering, by the target engine, the traffic analysis result based on the result filter condition;
sending, by the target engine, a filtered traffic analysis result to the management node; and
sending, by the management node, the filtered traffic analysis result to a user terminal.

7. The method according to any one of claims 1 to 6, wherein the obtaining, by the management node, program code of a domain-specific language DSL corresponding to a target traffic analysis task comprises:
receiving, by the management node, a program purchase request submitted by the user terminal, wherein the program purchase request carries an identifier of the target traffic analysis task; and
obtaining, by the management node based on the identifier of the target traffic analysis task, the program code of the DSL corresponding to the target traffic analysis task from stored program code of DSLs corresponding to a plurality of traffic analysis tasks.

8. A cloud platform, wherein the cloud platform comprises a management node and a plurality of traffic analysis engines;
the management node is configured to obtain program code of a domain-specific language, DSL corresponding to a target traffic analysis task, wherein the program code comprises a location of a traffic analysis object, and the traffic analysis object is used to carry to-be-analyzed target traffic;
the management node is configured to verify the program code;
the management node is configured to: when the verification of the program code succeeds, allocate the program code to a target engine, wherein the target engine is a traffic analysis engine closest to the traffic analysis object in the plurality of traffic analysis engines; and
the target engine is configured to determine a traffic analysis result based on the program code.

9. The cloud platform according to claim 8, wherein
the management node is configured to perform syntax analysis on the program code, to obtain a syntax analysis result;
the management node is configured to: when the syntax analysis result indicates that the program code has no syntax error, perform semantic analysis on the program code, to obtain a semantic analysis result; and
the management node is configured to: when the semantic analysis result indicates that the program code has no semantic error, determine that the verification of the program code succeeds.

10. The cloud platform according to claim 8, wherein
the target engine is configured to perform just-in-time compilation on the program code, to obtain executable code corresponding to the program code; and
the target engine is configured to run the executable code, to obtain the traffic analysis result.

11. The cloud platform according to claim 10, wherein
the target engine is configured to determine, based on the program code, a plurality of operators used to execute the target traffic analysis task;
the target engine is configured to orchestrate a sequence of the plurality of operators, to obtain an operator orchestration result; and
the target engine is configured to determine the operator orchestration result as the executable code corresponding to the program code.

12. The cloud platform according to claim 11, wherein
the target engine is configured to perform traffic analysis on the target traffic by running the plurality of operators based on the operator orchestration result, to obtain the traffic analysis result.

13. The cloud platform according to any one of claims 8 to 12, wherein the program code comprises a result filter condition;
the target engine is configured to filter the traffic analysis result based on the result filter condition;
the target engine is configured to send a filtered traffic analysis result to the management node; and
the management node is configured to send the filtered traffic analysis result to a user terminal.

14. The cloud platform according to any one of claims 8 to 13, wherein
the management node is configured to receive a program purchase request submitted by the user terminal, wherein the program purchase request carries an identifier of the target traffic analysis task; and
the management node is configured to obtain, based on the identifier of the target traffic analysis task, the program code of the DSL corresponding to the target traffic analysis task from stored program code of DSLs corresponding to a plurality of traffic analysis tasks.

15. A computer-readable storage medium, wherein the storage medium comprises computer program instructions, and when the computer program instructions are executed by a computing device cluster, the computing device cluster performs the method according to any one of claims 1 to 7.

## Patentansprüche

1. Verkehrsanalyseverfahren, das auf eine Cloud-Plattform angewandt wird, wobei die Cloud-Plattform einen Verwaltungsknoten und eine Vielzahl von Verkehrsanalyse-Engines umfasst und das Verfahren Folgendes umfasst:
Erlangen (201), durch den Verwaltungsknoten, eines Programmcodes einer domänenspezifischen Sprache, DSL, die einer Zielverkehrsanalyseaufgabe entspricht, wobei der Programmcode einen Ort eines Verkehrsanalyseobjekts umfasst und das Verkehrsanalyseobjekt dazu verwendet wird, einen zu analysierenden Zielverkehr zu enthalten;
Überprüfen (202), durch den Verwaltungsknoten, des Programmcodes; wenn die Überprüfung des Programmcodes erfolgreich ist, Zuweisen (203), durch den Verwaltungsknoten, des Programmcodes zu einer Ziel-Engine, wobei die Ziel-Engine eine Verkehrsanalyse-Engine ist, die dem Verkehrsanalyseobjekt in der Vielzahl von Verkehrsanalyse-Engines am nächsten liegt; und
Bestimmen (204), durch die Ziel-Engine, eines Verkehrsanalyseergebnisses basierend auf dem Programmcode.

2. Verfahren nach Anspruch 1, wobei das Überprüfen, durch den Verwaltungsknoten, des Programmcodes Folgendes umfasst:
Durchführen, durch den Verwaltungsknoten, einer Syntaxanalyse an dem Programmcode, um ein Syntaxanalyseergebnis zu erlangen;
wenn das Syntaxanalyseergebnis angibt, dass der Programmcode keinen Syntaxfehler aufweist, Durchführen, durch den Verwaltungsknoten, einer Semantikanalyse an dem Programmcode, um ein Semantikanalyseergebnis zu erlangen; und
wenn das Semantikanalyseergebnis angibt, dass der Programmcode keinen Semantikfehler aufweist, Bestimmen, durch den Verwaltungsknoten, dass die Überprüfung des Programmcodes erfolgreich ist.

3. Verfahren nach Anspruch 1, wobei das Bestimmen, durch die Ziel-Engine, eines Verkehrsanalyseergebnisses basierend auf dem Programmcode Folgendes umfasst:
Durchführen, durch die Ziel-Engine, einer Just-in-Time-Kompilierung an dem Programmcode, um einen ausführbaren Code zu erlangen, der dem Programmcode entspricht; und
Ausführen, durch die Ziel-Engine, des ausführbaren Codes, um das Verkehrsanalyseergebnis zu erlangen.

4. Verfahren nach Anspruch 3, wobei das Durchführen, durch die Ziel-Engine, einer Just-in-Time-Kompilierung an dem Programmcode, um einen ausführbaren Code zu erlangen, der dem Programmcode entspricht, Folgendes umfasst:
Bestimmen, durch die Ziel-Engine basierend auf dem Programmcode, einer Vielzahl von Operatoren, die dazu verwendet wird, die Zielverkehrsanalyseaufgabe auszuführen;
Orchestrieren, durch die Ziel-Engine, einer Sequenz der Vielzahl von Operatoren, um ein Operatororchestrierungsergebnis zu erlangen; und
Bestimmen, durch die Ziel-Engine, des Operatororchestrierungsergebnisses als den ausführbaren Code, der dem Programmcode entspricht.

5. Verfahren nach Anspruch 4, wobei das Ausführen, durch die Ziel-Engine, des ausführbaren Codes, um das Verkehrsanalyseergebnis zu erlangen, Folgendes umfasst:
Durchführen, durch die Ziel-Engine, der Verkehrsanalyse an dem Zielverkehr durch Ausführen der Vielzahl von Operatoren basierend auf dem Operatororchestrierungsergebnis, um das Verkehrsanalyseergebnis zu erlangen.

6. Verfahren nach einem der Ansprüche 1 bis 5, wobei der Programmcode eine Ergebnisfilterbedingung umfasst; und
das Verfahren nach dem Bestimmen, durch die Ziel-Engine, eines Verkehrsanalyseergebnisses basierend auf dem Programmcode ferner Folgendes umfasst:
Filtern, durch die Ziel-Engine, des Verkehrsanalyseergebnisses basierend auf der Ergebnisfilterbedingung;
Senden, durch die Ziel-Engine, eines gefilterten Verkehrsanalyseergebnisses an den Verwaltungsknoten; und
Senden, durch den Verwaltungsknoten, des gefilterten Verkehrsanalyseergebnisses an ein Benutzerendgerät.

7. Verfahren nach einem der Ansprüche 1 bis 6, wobei das Erlangen, durch den Verwaltungsknoten, eines Programmcodes einer domänenspezifischen Sprache, DSL, die einer Zielverkehrsanalyseaufgabe entspricht, Folgendes umfasst:
Empfangen, durch den Verwaltungsknoten, einer Programmkaufanforderung, die durch das Benutzerendgerät übermittelt wird, wobei die Programmkaufanforderung eine Kennung der Zielverkehrsanalyseaufgabe enthält; und
Erlangen, durch den Verwaltungsknoten basierend auf der Kennung der Zielverkehrsanalyseaufgabe, des Programmcodes der DSL, die der Zielverkehrsanalyseaufgabe entspricht, aus einem gespeicherten Programmcode von DSLs, die einer Vielzahl von Verkehrsanalyseaufgaben entsprechen.

8. Cloud-Plattform, wobei die Cloud-Plattform einen Verwaltungsknoten und eine Vielzahl von Verkehrsanalyse-Engines umfasst;
der Verwaltungsknoten dazu konfiguriert ist, einen Programmcode einer domänenspezifischen Sprache, DSL, zu erlangen, die einer Zielverkehrsanalyseaufgabe entspricht, wobei der Programmcode einen Ort eines Verkehrsanalyseobjekts umfasst und das Verkehrsanalyseobjekt dazu verwendet wird, einen zu analysierenden Zielverkehr zu enthalten;
der Verwaltungsknoten dazu konfiguriert ist, den Programmcode zu überprüfen;
der Verwaltungsknoten zu Folgendem konfiguriert ist: wenn die Überprüfung des Programmcodes erfolgreich ist, Zuweisen des Programmcodes zu einer Ziel-Engine, wobei die Ziel-Engine eine Verkehrsanalyse-Engine ist, die dem Verkehrsanalyseobjekt in der Vielzahl von Verkehrsanalyse-Engines am nächsten liegt; und
die Ziel-Engine dazu konfiguriert ist, ein Verkehrsanalyseergebnis basierend auf dem Programmcode zu bestimmen.

9. Cloud-Plattform nach Anspruch 8, wobei
der Verwaltungsknoten dazu konfiguriert ist, eine Syntaxanalyse an dem Programmcode durchzuführen, um ein Syntaxanalyseergebnis zu erlangen;
der Verwaltungsknoten zu Folgendem konfiguriert ist: wenn das Syntaxanalyseergebnis angibt, dass der Programmcode keinen Syntaxfehler aufweist, Durchführen einer Semantikanalyse an dem Programmcode, um ein Semantikanalyseergebnis zu erlangen; und
der Verwaltungsknoten zu Folgendem konfiguriert ist: wenn das Semantikanalyseergebnis angibt, dass der Programmcode keinen Semantikfehler aufweist, Bestimmen, dass die Überprüfung des Programmcodes erfolgreich ist.

10. Cloud-Plattform nach Anspruch 8, wobei
die Ziel-Engine dazu konfiguriert ist, eine Just-in-Time-Kompilierung an dem Programmcode durchzuführen, um einen ausführbaren Code zu erlangen, der dem Programmcode entspricht; und
die Ziel-Engine dazu konfiguriert ist, den ausführbaren Code auszuführen, um das Verkehrsanalyseergebnis zu erlangen.

11. Cloud-Plattform nach Anspruch 10, wobei
die Ziel-Engine dazu konfiguriert ist, basierend auf dem Programmcode, eine Vielzahl von Operatoren zu bestimmen, die dazu verwendet wird, die Zielverkehrsanalyseaufgabe auszuführen;
die Ziel-Engine dazu konfiguriert ist, eine Sequenz der Vielzahl von Operatoren zu orchestrieren, um ein Operatororchestrierungsergebnis zu erlangen; und
die Ziel-Engine dazu konfiguriert ist, das Operatororchestrierungsergebnis als den ausführbaren Code zu bestimmen, der dem Programmcode entspricht.

12. Cloud-Plattform nach Anspruch 11, wobei
die Ziel-Engine dazu konfiguriert ist, die Verkehrsanalyse an dem Zielverkehr durch Ausführen der Vielzahl von Operatoren basierend auf dem Operatororchestrierungsergebnis durchzuführen, um das Verkehrsanalyseergebnis zu erlangen.

13. Cloud-Plattform nach einem der Ansprüche 8 bis 12, wobei der Programmcode eine Ergebnisfilterbedingung umfasst;
die Ziel-Engine dazu konfiguriert ist, das Verkehrsanalyseergebnis basierend auf der Ergebnisfilterbedingung zu filtern;
die Ziel-Engine dazu konfiguriert ist, ein gefiltertes Verkehrsanalyseergebnis an den Verwaltungsknoten zu senden; und
der Verwaltungsknoten dazu konfiguriert ist, das gefilterte Verkehrsanalyseergebnis an ein Benutzerendgerät zu senden.

14. Cloud-Plattform nach einem der Ansprüche 8 bis 13, wobei
der Verwaltungsknoten dazu konfiguriert ist, eine Programmkaufanforderung zu empfangen, die durch das Benutzerendgerät übermittelt wird, wobei die Programmkaufanforderung eine Kennung der Zielverkehrsanalyseaufgabe enthält; und
der Verwaltungsknoten dazu konfiguriert ist, basierend auf der Kennung der Zielverkehrsanalyseaufgabe den Programmcode der DSL, die der Zielverkehrsanalyseaufgabe entspricht, aus einem gespeicherten Programmcode von DSLs, die einer Vielzahl von Verkehrsanalyseaufgaben entsprechen, zu erlangen.

15. Computerlesbares Speichermedium, wobei das Speichermedium Computerprogrammanweisungen speichert und, wenn die Computerprogrammanweisungen durch einen Rechenvorrichtungscluster ausgeführt werden, der Rechenvorrichtungscluster das Verfahren nach einem der Ansprüche 1 bis 7 durchführt.

## Revendications

1. Procédé d'analyse de trafic, appliqué à une plateforme en nuage, dans lequel la plateforme en nuage comprend un nœud de gestion et une pluralité de moteurs d'analyse de trafic, et le procédé comprend :
l'obtention (201), par le nœud de gestion, d'un code de programme d'un langage spécifique à un domaine, DSL, correspondant à une tâche d'analyse de trafic cible, dans lequel le code de programme comprend un emplacement d'un objet d'analyse de trafic, et l'objet d'analyse de trafic est utilisé pour transporter le trafic cible à analyser ;
la vérification (202), par le nœud de gestion, du code de programme ;
lorsque la vérification du code de programme réussit, l'allocation (203), par le nœud de gestion, du code de programme à un moteur cible, dans lequel le moteur cible est un moteur d'analyse de trafic le plus proche de l'objet d'analyse de trafic parmi la pluralité de moteurs d'analyse de trafic ; et
la détermination (204), par le moteur cible, d'un résultat d'analyse de trafic sur la base du code de programme.

2. Procédé selon la revendication 1, dans lequel, la vérification, par le nœud de gestion, du code de programme comprend :
la réalisation, par le nœud de gestion, d'une analyse syntaxique du code de programme, pour obtenir un résultat d'analyse syntaxique ;
lorsque le résultat d'analyse syntaxique indique que le code de programme n'a aucune erreur de syntaxe, la réalisation, par le nœud de gestion, d'une analyse sémantique du code de programme pour obtenir un résultat d'analyse sémantique ; et
lorsque le résultat d'analyse sémantique indique que le code de programme n'a aucune erreur sémantique, la détermination, par le nœud de gestion, que la vérification du code de programme a réussi.

3. Procédé selon la revendication 1, dans lequel la détermination, par le moteur cible, d'un résultat d'analyse de trafic sur la base du code de programme comprend :
la réalisation, par le moteur cible, d'une compilation à la volée du code de programme, pour obtenir un code exécutable correspondant au code de programme ; et
l'exécution, par le moteur cible, du code exécutable pour obtenir le résultat d'analyse de trafic.

4. Procédé selon la revendication 3, dans lequel la réalisation, par le moteur cible, d'une compilation à la volée du code de programme, pour obtenir un code exécutable correspondant au code de programme comprend :
la détermination, par le moteur cible sur la base du code de programme, d'une pluralité d'opérateurs utilisés pour exécuter la tâche d'analyse de trafic cible ;
l'orchestration, par le moteur cible, d'une séquence de la pluralité d'opérateurs, pour obtenir un résultat d'orchestration d'opérateurs ; et
la détermination, par le moteur cible, du résultat d'orchestration d'opérateurs en tant que code exécutable correspondant au code de programme.

5. Procédé selon la revendication 4, dans lequel l'exécution, par le moteur cible, du code exécutable, pour obtenir le résultat d'analyse de trafic, comprend :
la réalisation, par le moteur cible, d'une analyse de trafic sur le trafic cible en exécutant la pluralité d'opérateurs sur la base du résultat d'orchestration d'opérateurs, pour obtenir le résultat d'analyse de trafic.

6. Procédé selon l'une quelconque des revendications 1 à 5, dans lequel le code de programme comprend une condition de filtrage des résultats ; et
après la détermination, par le moteur cible, d'un résultat d'analyse de trafic sur la base du code de programme, le procédé comprend également :
le filtrage, par le moteur cible, du résultat d'analyse de trafic sur la base de la condition de filtrage des résultats ;
l'envoi, par le moteur cible, d'un résultat d'analyse de trafic filtré au nœud de gestion ; et
l'envoi, par le nœud de gestion, du résultat d'analyse de trafic filtré à un terminal utilisateur.

7. Procédé selon l'une quelconque des revendications 1 à 6, dans lequel l'obtention, par le nœud de gestion, d'un code de programme d'un langage spécifique à un domaine DSL correspondant à une tâche d'analyse de trafic cible comprend :
la réception, par le nœud de gestion, d'une demande d'achat de programme soumise par le terminal utilisateur, dans lequel la demande d'achat de programme contient un identifiant de la tâche d'analyse de trafic cible ; et
l'obtention, par le nœud de gestion sur la base de l'identifiant de la tâche d'analyse de trafic cible, du code de programme du DSL correspondant à la tâche d'analyse de trafic cible à partir d'un code de programme stocké de DSL correspondant à une pluralité de tâches d'analyse de trafic.

8. Plateforme en nuage, dans laquelle la plateforme en nuage comprend un nœud de gestion et une pluralité de moteurs d'analyse de trafic ;
le nœud de gestion est configuré pour obtenir un code de programme d'un langage spécifique à un domaine, DSL, correspondant à une tâche d'analyse de trafic cible, dans laquelle le code de programme comprend un emplacement d'un objet d'analyse de trafic, et l'objet d'analyse de trafic est utilisé pour transporter le trafic cible à analyser ;
le nœud de gestion est configuré pour vérifier le code de programme ;
le nœud de gestion est configuré pour : lorsque la vérification du code de programme réussit, allouer le code de programme à un moteur cible, dans laquelle le moteur cible est un moteur d'analyse de trafic le plus proche de l'objet d'analyse de trafic parmi la pluralité de moteurs d'analyse de trafic ; et
le moteur cible est configuré pour déterminer un résultat d'analyse de trafic sur la base du code de programme.

9. Plateforme en nuage selon la revendication 8, dans laquelle
le nœud de gestion est configuré pour réaliser une analyse syntaxique du code de programme, pour obtenir un résultat d'analyse syntaxique ;
le nœud de gestion est configuré pour : lorsque le résultat d'analyse syntaxique indique que le code de programme n'a aucune erreur de syntaxe, réaliser une analyse sémantique du code de programme pour obtenir un résultat d'analyse sémantique ; et
le nœud de gestion est configuré pour : lorsque le résultat d'analyse sémantique indique que le code de programme n'a aucune erreur sémantique, déterminer que la vérification du code de programme a réussi.

10. Plateforme en nuage selon la revendication 8, dans laquelle
le moteur cible est configuré pour réaliser une compilation à la volée du code de programme, pour obtenir un code exécutable correspondant au code de programme ; et
le moteur cible est configuré pour exécuter le code exécutable pour obtenir le résultat d'analyse de trafic.

11. Plateforme en nuage selon la revendication 10, dans laquelle
le moteur cible est configuré pour déterminer, sur la base du code de programme, une pluralité d'opérateurs utilisés pour exécuter la tâche d'analyse de trafic cible ;
le moteur cible est configuré pour orchestrer une séquence de la pluralité d'opérateurs, pour obtenir un résultat d'orchestration d'opérateurs ; et
le moteur cible est configuré pour déterminer le résultat d'orchestration d'opérateurs en tant que code exécutable correspondant au code de programme.

12. Plateforme en nuage selon la revendication 11, dans laquelle
le moteur cible est configuré pour réaliser une analyse de trafic sur le trafic cible en exécutant la pluralité d'opérateurs sur la base du résultat d'orchestration d'opérateurs, pour obtenir le résultat d'analyse de trafic.

13. Plateforme en nuage selon l'une quelconque des revendications 8 à 12, dans laquelle le code de programme comprend une condition de filtrage des résultats ;
le moteur cible est configuré pour filtrer le résultat d'analyse de trafic sur la base de la condition de filtrage des résultats ; le moteur cible est configuré pour envoyer un résultat d'analyse de trafic filtré au nœud de gestion ; et
le nœud de gestion est configuré pour envoyer le résultat d'analyse de trafic filtré à un terminal utilisateur.

14. Plateforme en nuage selon l'une quelconque des revendications 8 à 13, dans laquelle
le nœud de gestion est configuré pour recevoir une demande d'achat de programme soumise par le terminal utilisateur, dans laquelle la demande d'achat de programme contient un identifiant de la tâche d'analyse de trafic cible ; et
le nœud de gestion est configuré pour obtenir, sur la base de l'identifiant de la tâche d'analyse de trafic cible, le code de programme du DSL correspondant à la tâche d'analyse de trafic cible à partir d'un code de programme stocké de DSL correspondant à une pluralité de tâches d'analyse de trafic.

15. Support de stockage lisible par ordinateur, dans lequel le support de stockage comprend des instructions de programme informatique, et lorsque les instructions de programme informatique sont exécutées par un groupe de dispositifs informatiques, le groupe de dispositifs informatiques réalise le procédé selon l'une quelconque des revendications 1 à 7.
